# EUROPÄISCHE PATENTSCHRIFT

(11) **EP 1 735 182 B1**
(45) Veröffentlichungstag und Bekanntmachung des Hinweises auf die Patenterteilung: **26.03.2008**
(21) Anmeldenummer: 05715621.8
(22) Anmeldetag: 01.03.2005
(51) Int. Cl.: B60N 2/36, B60N 2/015, B60N 2/433

(54) **VORRICHTUNG ZUR VERRIEGELUNG UND/ODER ZUR ENTRIEGELUNG EINER KOMPONENTE, INSBESONDERE IN ODER AN EINEM FAHRZEUG, UND VERFAHREN**
DEVICE FOR LOCKING AND/OR UNLOCKING A COMPONENT, IN PARTICULAR IN/OR ON A VEHICLE AND METHOD
DISPOSITIF DE VERROUILLAGE ET/OU DE DEVERROUILLAGE D'UN COMPOSANT, EN PARTICULIER DANS/OU SUR UN VEHICULE, ET PROCEDE Y RELATIF

(30) Priorität: 07.04.2004 DE 102004017592
(43) Veröffentlichungstag der Anmeldung: 27.12.2006
(73) Patentinhaber: Johnson Controls GmbH, 51399 Burscheid (DE)
(72) Erfinder: HAIDA, Stefan, 42855 Remscheid (DE); REGINOLD, Kirubaharan, Albert, 51399 Burscheid (DE)
(74) Vertreter: Wolff, Felix
(86) Internationale Anmeldenummer: PCT/EP2005/002124
(87) Internationale Veröffentlichungsnummer: WO 2005/097544

(56) Entgegenhaltungen:
- GB-A- 2 231 617
- US-B1- 6 629 710

## Beschreibung

Die Erfindung betrifft eine Vorrichtung zur Verriegelung und/oder Entriegelung einer Komponente, insbesondere in oder an einem Fahrzeug, bezüglich eines Gegenelements, wobei die Vorrichtung ein Verriegelungselement und Sperrelement aufweist, wobei das Verriegelungselement in eine Verriegelungsposition und in eine Entriegelungsposition einstellbar ist, wobei das Sperrelement in eine Sperrposition und in eine Betätigungsposition einstellbar ist und wobei die Einstellung der Sperrposition die Einstellung der Verriegelungsposition bedingt.

Solche Vorrichtungen sind allgemein bekannt. Sie finden insbesondere bei Fahrzeugen, beispielsweise bei Kraftfahrzeugen, dort Anwendung, wo Komponenten zum einen beweglich und damit in verschiedene Positionen einstellbar sind und zum anderen in wenigstens einer dieser Positionen gegen vergleichsweise große Kräfte arretiert werden müssen. Dies ist beispielsweise für Unfallsituationen relevant, wo beispielsweise als Fahrzeugsitze ausgebildete Komponenten in ihrer normalen Position, d.h. ihrer Gebrauchsposition, in der sie Fahrzeuginsassen eine Sitzgelegenheit bieten, fest arretiert sein müssen, wohingegen sie beispielsweise zum erleichterten Einsteigen von Fahrzeuginsassen auf einer Rücksitzbank oder auch zur Vergrößerung des Laderaumvolumens umgeklappt werden müssen. Hierzu ist es allgemein bekannt, reversible Klinkenschlösser zu benutzen, bei denen ein Haken einen auf der Gegenseite befindlichen Bolzen entweder arretieren bzw. verriegeln kann oder auch entriegeln kann. Der Haken weist dabei herkömmlicherweise zwei unterschiedliche Einstellpositionen auf, wobei ein solcher Haken herkömmlicherweise zumindest in seine Verriegelungsstellung oder Verriegelungsposition aktiv "einschnappt". In der Regel ist dies dann der Fall, wenn der auf der Gegenseite befindliche Bolzen in den Bereich des Eingriffs des Hakens kommt, so dass durch Verriegelung des Hakens bzw. durch die Einnahme seiner Verriegelungsposition eine feste Arretierung bzw. Verriegelung ermöglicht wird. Bei den erfindungsgemäßen Sperrverschlüssen ist es jedoch möglich, dass der Haken auch irrtümlich in die Verriegelungsposition springt bzw. schnappt, so dass anschließend eine ordnungsgemäße Verriegelung insbesondere für einen Benutzer nur sehr schwer detektierbar ist. Das Resultat ist, dass die Sicherheit von Insassen von Fahrzeugen erheblich herabgesetzt ist.

Weiterhin ist es bei den bekannten Sperrverschlüssen in der Regel so, dass eine Sperrklinke bzw. ein Sperrnocken vor einem Öffnen bzw. vor einem Entriegeln des Hakens in eine offene Position gebracht werden muss, wobei jedoch für eine ordnungsgemäße Funktion sichergestellt werden muss, dass der auf der Gegenseite des Sperrverschlusses befindliche Bolzen auch tatsächlich entriegelt wird, d. h. außerhalb des Eingriffsbereichs des Hakens kommt. Andernfalls ist es möglich, dass wiederum der Haken in seine Verriegelungsposition schnappt bzw. fällt, ohne dass der Bolzen verriegelt ist, so dass wiederum die Sicherheit von Fahrzeuginsassen drastisch aufgrund einer nur scheinbaren aber nicht wirklich bewirkten Verriegelung herabgesetzt wird.

Die US 6 629 710 B offenbart eine Vorrichtung nach dem Oberbegriff des Anspruchs 1 und ein Verfahren nach dem Oberbegriff des Anspruchs 9.

Der Erfindung liegt daher die Aufgabe zugrunde, eine einfach zu fertigende, aufgrund der insbesondere vertikalen Anordnung von Haken und Sperrelement bauraumkompakte und kostengünstig herstellbare Vorrichtung zur Verriegelung und/oder zur Entriegelung einer Komponente, insbesondere in oder an einem Fahrzeug, zu schaffen, die die Nachteile des Standes der Technik vermeidet.

Diese Aufgabe wird erfindungsgemäß gelöst durch eine Vorrichtung nach den Anspruch 1.

Bevorzugt ist ferner, dass die Einstellung der Auswurfposition die Einstellung der Betätigungsposition bedingt. Hierdurch wird vorteilhafterweise bewirkt, dass keine Verminderung der Schließsicherheit eintritt, sondern dass eine Öffnung bzw. Entriegelung des Gegenelements nur nach einer Betätigung des Sperrelements möglich ist.

Ferner ist bevorzugt, dass das Verriegelungselement ein Haken ist und insbesondere dass das Verriegelungselement und das Sperrelement mittels eines ersten Federmittels verbunden sind. Hierdurch kann die erfindungsgemäße Vorrichtung in einfacher Weise und mit besonders einfachen Mitteln kostengünstig hergestellt werden.

Bevorzugt ist ferner, dass das Verriegelungselement um eine erste Drehachse drehbar angeordnet ist und dass das Sperrelement um eine zweite Drehachse drehbar angeordnet ist. Hierdurch lassen sich die Elemente vergleichsweise reibungsarm realisieren, so dass ein sicherer Betrieb der Vorrichtung gewährleistet ist.

Ferner ist bevorzugt, dass die Vorrichtung ein Führungselement aufweist, wobei das Führungselement die Anordnung des Verriegelungselements und des Sperrelements relativ zueinander festlegt, insbesondere die erste und die zweite Drehachse festlegt. Auf besonders vorteilhafte Weise bewirkt das Führungselement, dass das Gegenelement lediglich in einer einzigen Position von dem Haken bzw. von dem Verriegelungselement verriegelt werden kann. Dadurch wird die Benutzungssicherheit der Vorrichtung mit einer damit einhergehenden Vergrößerung der Sicherheit für Insassen von Kraftfahrzeugen vergrößert.

Ferner ist bevorzugt, dass das Auswurfelement eine gegenüber dem Verriegelungselement und/oder dem Sperrelement verschiebbare Schiebeplatte ist, die Mittels eines zweiten Federmittels auf die Auswurfposition hin vorgespannt ist. Dies hat erfindungsgemäß den besonderen Vorteil, dass mit extrem einfachen Mitteln eine sichere Entriegelung der Vorrichtung bewirkt werden kann.

Ein weiterer Gegenstand der vorliegenden Erfindung ist ein Verfahren nach den Anspruch 9.

Ferner ist weiterhin bevorzugt, dass ein Anschlag bzw. eine erste Steuerkomponente des Auswurfelements das Verriegelungselement und/oder ein Sperrelement blockiert, wenn sich das Auswurfelement in seiner Auswurfposition befindet. Hierdurch kann die Wirkung des ersten Federmittels, welches tendenziell auf die Einstellung der Verriegelungsposition hin wirkt, in der Auswurfposition des Auswurfelements blockiert werden. Beim Durchführen der gesamten Verriegelung des Gegenelements wird das Auswurfelement seine Spannposition gebracht, wobei zunächst der Anschlag bzw. die erste Steuerkomponente des Auswurfelements das Sperrelement bzw. das Verriegelungselement freigibt, wodurch sich das Verriegelungselement aus der statischen Entriegelungsposition herausbewegt, dabei beispielhaft aufgrund der Spannung des ersten Federmittels von dem Sperrelement nachgezogen wird bis das Verriegelungselement in seiner Verriegelungsposition eingestellt ist.

Besonders bevorzugt ist, dass beim Entriegeln der Komponente das Auswurfelement aufgrund der Vorspannung eines zweiten Federmittels zumindest eine auf das Entfernen der Komponente von dem Gegenelement unterstützende Wirkung hat. Insbesondere ist es dadurch vorteilhaft möglich, dass die Komponente gegenüber dem Gegenelement angehoben werden kann, zumindest jedoch die Trennung der beiden unterstützt werden kann.

Besonders bevorzugt ist, dass die Komponente ein Sperrelement aufweist, wobei das Sperrelement in eine Sperrposition und in eine Betätigungsposition einstellbar ist und wobei insbesondere die Einstellung der Sperrposition die Einstellung der Verriegelungsposition bedingt. Die Funktionalität der erfindungsgemäßen Komponente bzw. der erfindungsgemäßen Vorrichtung kann hierdurch weiter erhöht werden.

Die Erfindung wird nachfolgend anhand von in der Zeichnung dargestellten Ausführungsbeispielen näher erläutert.
- **Figuren 1 und 8**: zeigen eine Seitenansicht der erfindungsgemäßen Vorrichtung in verriegelter Position,
- **Figuren 2 und 7**: zeigen eine perspektivische Darstellung der erfindungsgemäßen Vorrichtung ebenfalls in verriegelter Position,
- **Figuren 3 und 6**: zeigen eine perspektivische Ansicht der erfindungsgemäßen Vorrichtung in entriegelter Position,
- **Figuren 4, 5 und 9**: zeigen eine Seitenansicht der erfindungsgemäßen Vorrichtung in entriegelter Position und
- **Figuren 10**: zeigt eine Vorderansicht der erfindungsgemäßen Vorrichtung in entriegelter Position.

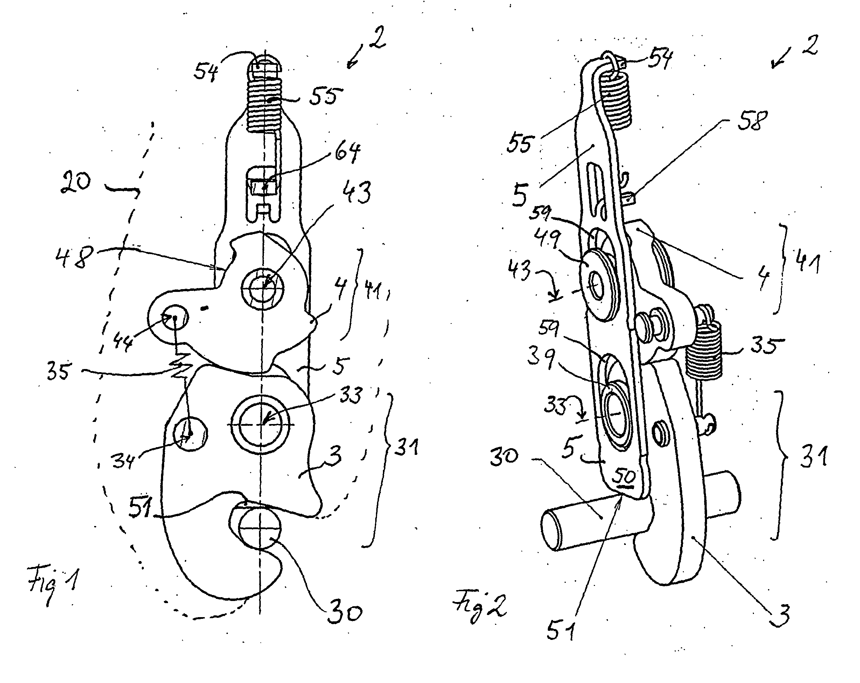

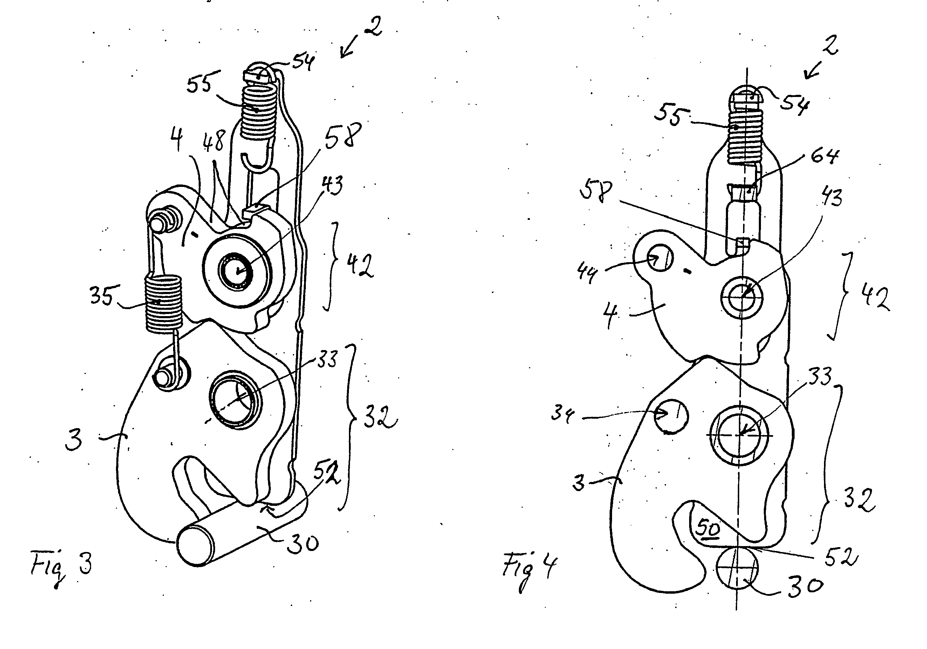

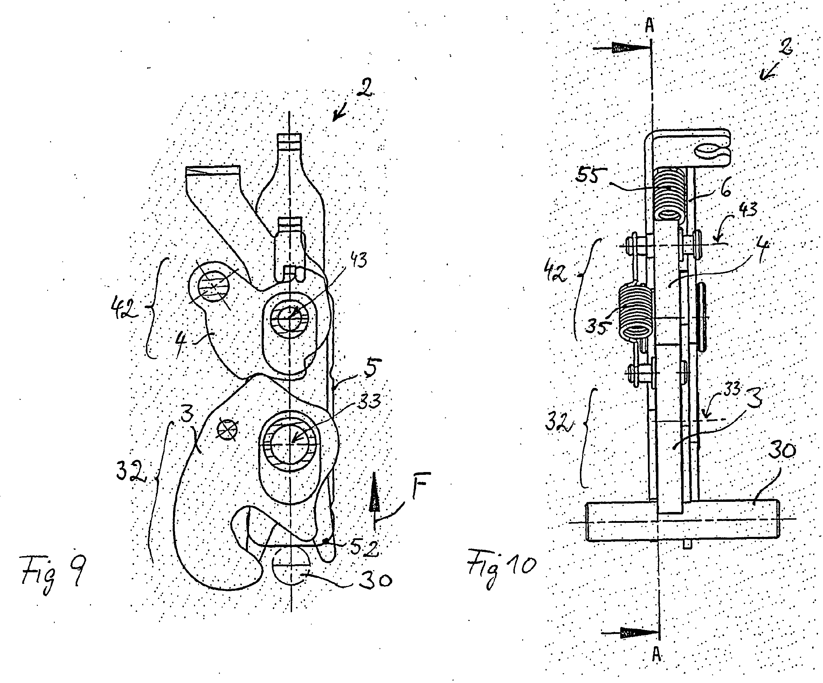

Die **Figuren 1 bis 10** stellen jeweils eine erfindungsgemäße Vorrichtung 2 dar, wobei die Figuren 1, 2, 7 und 8 die Vorrichtung 2 in einer verriegelten Position darstellen und wobei die Figuren 3, 4, 5, 6, 9 und 10 die Vorrichtung 2 in einer entriegelten Position darstellen. Es zeigen hierbei die Figuren 1, 4, 5, 8 und 9 jeweils eine Seitenansicht der Vorrichtung 2. Es stellen die Figuren 2, 3, 6 und 7 jeweils eine perspektivische Darstellung der Vorrichtung 2 dar und es stellt die Figur 10 eine Vorderansicht der Vorrichtung 2 dar.

Die Vorrichtung 2 dient erfindungsgemäß zur Sperrverrastung einer Komponente 20, insbesondere in oder an einem Fahrzeug, insbesondere einem Kraftfahrzeug, wobei die Komponente 20 erfindungsgemäß mit einer nicht eigens bezeichneten Gegenkomponente zumindest in bestimmten Situationen bzw. zeitweise miteinander verriegelt werden kann. In anderen Situationen soll die Verriegelung aufgehoben werden und ein entriegelter Zustand herbeigeführt werden. Von der Gegenkomponente ist lediglich das Gegenelement 30 in den Figuren 1 bis 10 dargestellt. Ansonsten ist die Vorrichtung 2 im wesentlichen komplett an der Komponente 20 untergebracht bzw. an dieser befestigt. In der Figur 1 ist andeutungsweise die Komponente 20 mittels einer gestrichelten Linie dargestellt. Hierbei kann es sich beispielsweise um einen Sitz oder um eine andere bewegliche Komponente in oder an einem Kraftfahrzeug handeln.

Die Vorrichtung 2 umfasst ein Verriegelungselement 3, welches insbesondere als ein Haken 3 vorgesehen ist und welches insbesondere um eine erste Drehachse 33 zumindest in Grenzen drehbar vorgesehen ist. Bei dem Verriegelungselement 3 sind selbstverständlich auch andere Ausführungen als ein Haken erfindungsgemäß möglich, beispielsweise ein Schieber oder dergleichen, wobei jedoch im folgenden beispielhaft lediglich auf die Ausführung des Verriegelungselements als Haken 3, der darüber hinaus noch drehbar um die erste Drehachse 33 vorgesehen ist. Das Verriegelungselement 3 bzw. der Haken 3 ist in einer Verriegelungsposition 31 und in einer Entriegelungsposition 32 einstellbar. Die Verriegelungsposition 31 des Hakens 3 ist in den Figuren dargestellt, die die Vorrichtung 2 in ihrer verriegelten Position darstellen, d. h. die Figuren 1, 2, 7 und 8. Die anderen Figuren zeigen das Verriegelungselement 3 in seiner Entriegelungsposition 32.

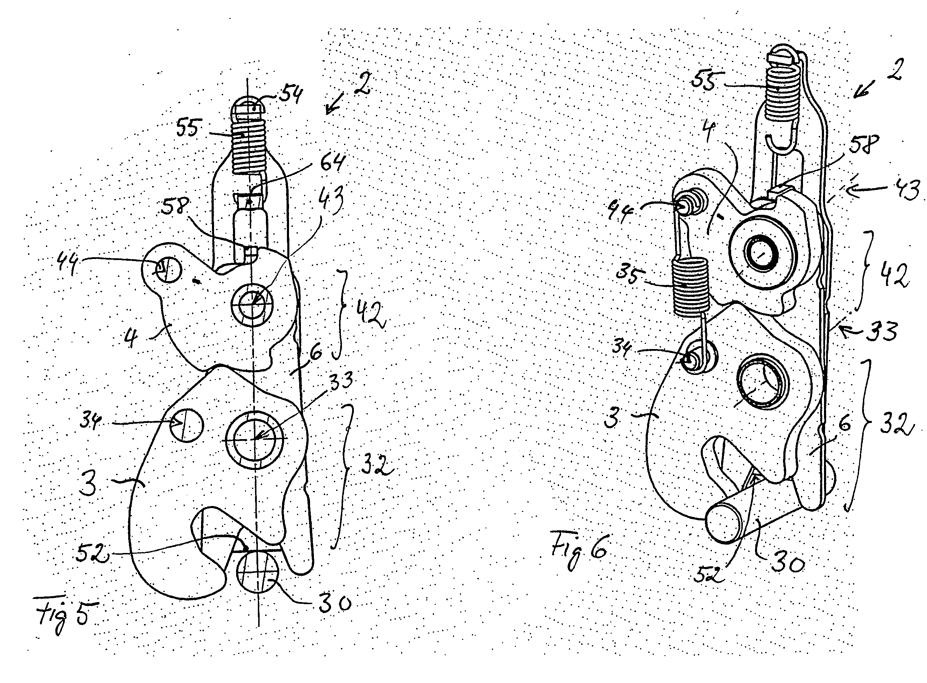

Die Vorrichtung weist weiterhin ein Sperrelement 4 auf, welches insbesondere ebenfalls drehbar an der Vorrichtung 2 angeordnet ist, wobei jedoch das Sperrelement 4 um eine zweite Drehachse 43 ebenfalls zumindest in Grenzen drehbar vorgesehen ist. Das Sperrelement 4 wird auch als Sperrnocken 4 bezeichnet. Das Sperrelement 4 ist in einer Sperrposition 41 und in eine Betätigungsposition 42 einstellbar. Die Sperrposition 41 des Sperrelementes 4 entspricht der Verriegelungsposition 31 des Verriegelungselementes 3. Die Sperrposition 41 ist in den Figuren 1, 2, 7 und 8 dargestellt. Entsprechend ist die Betätigungsposition 42 des Sperrelementes 4 in den Figuren 3, 4, 5, 6, 9 und 10 dargestellt. Die erste Drehachse 33 und die zweite Drehachse 43 sind mittels eines Führungselementes 6, welches lediglich in den Figuren 5, 6, 8 und 10 eigens bezeichnet ist, festgelegt, d. h. das Führungselement 6 definiert die Positionen des Verriegelungselementes 3 und des Sperrelementes 4 relativ zueinander, insbesondere ihre Drehachsen 33, 43. Beabstandet von den jeweiligen Drehachsen 33 und 43 umfasst sowohl das Verriegelungselement 3 einen ersten Angriffspunkt 34 als auch das Sperrelement 4 einen zweiten Angriffspunkt 44, wobei zwischen dem ersten und zweiten Angriffspunkt 34, 44 ein erstes Federmittel 35 angeordnet ist. Das erste Federmittel 35 tendiert dazu, den ersten und zweiten Angriffspunkt 34, 44 näher zueinander zu bringen. Hierbei ist es so, dass der Hebelarm in Kraftrichtung des ersten Federelementes 35 an dem Sperrelement 4 größer ist als am Verriegelungselement 3. Das bedeutet, dass ohne sonstige Einwirkungen bei einer vergleichsweise leichtgängigen Drehbarkeit sowohl des Verriegelungselements 3 als auch des Sperrelementes 4 um ihre jeweiligen Drehachsen 33, 43 das Verriegelungselement 3 aufgrund des ersten Federmittels 35 die Tendenz hat, in seine Verriegelungsposition 31 einzurasten, in welcher das Verriegelungselement 3 durch das Sperrelement 4 (welches sich in seiner Sperrposition 41 befindet) gehalten wird.

Erfindungsgemäß weist die Vorrichtung 2 weiterhin auch ein Auswurfelement 5 auf, welches mittels Langlöcher 59 verschieblich relativ zu den Drehachsen 33, 43 und entsprechend auch verschieblich zu dem Verriegelungselement 3 bzw. dem Sperrelement 4 angeordnet ist. Das Auswurfelement ist mittels lediglich in Figur 2 explizit bezeichneter Führungselemente, nämlich einem insbesondere einstückig mit dem Sperrelement 4 verbundenen zweiten Führungselement 49 und einem insbesondere einstückig mit dem Verriegelungselement 3 verbundenen ersten Führungselement 39 geführt angeordnet. In seinem unteren Bereich 50 ist es für das Auswurfelement 5 möglich, sich in einen Bereich des durch den Haken 3 verriegelten Gegenelements 30 vorzuschieben, wenn sich die Vorrichtung 2 in ihrer entriegelten Position befindet. Dies ist eindrucksvoll durch einen Vergleich der Figuren 1 und 4 ersichtlich. Das Auswurfelement 5 ist ebenfalls in zwei Positionen einstellbar, nämlich in eine Spannposition 51 und in eine Aufwurfposition 52. In den Figuren 1, 2, 7 und 8 ist das Auswurfelement 5 in der Spannposition 51 eingestellt und in den anderen Figuren ist das Auswurfelement 5 in der Auswurfposition 52 eingestellt. Wie bereits angedeutet, befindet sich der untere Bereich 50 des Auswurfelements 5 in einem Greifbereich des Hakens 3, in welchem der Haken 3 bei verriegelter Position der Vorrichtung das Gegenelement 30 halten würde. Es ist nun erfindungsgemäß so, dass das Auswurfelement 5 mittels eines zweiten Federmittels 55 in Richtung seiner Auswurfposition 52 vorgespannt ist. Falls also das Verriegelungselement 3 gerade in seine Entriegelungsposition 32 bewegt wurde, verursacht die Vorspannung des zweiten Federelementes 55, dass das Gegenelement 30 aus dem Verriegelungsbereich des Hakens 3 herausgeschoben bzw. ausgeworfen wird. Hierzu ist das zweite Federmittel 55 mittels eines dritten Angriffspunktes 54 mit dem Auswurfelement 5 verbunden und es ist das zweite Federmittel 55 weiterhin mittels eines vierten Angriffspunktes 64, der sich am Führungselement 6 befindet, befestigt.

Angenommen, es befindet sich kein Gegenelement 30 verriegelt in der Vorrichtung 2, so ist das Auswurfelement 5 in seiner Aufwurfposition 52 eingestellt, was bewirkt, dass eine erste Steuerkomponente 58 am Auswurfelement 5 im Zusammenwirken mit einer zweiten Steuerkomponente 48, die an dem Sperrelement 4, insbesondere als Ausnehmung, angeordnet ist, dass das Sperrelement 4 sich nicht entgegen dem Uhrzeigersinn von seiner Betätigungsposition 42 in seine Sperrposition 41 bewegen kann. Dies hat zur Folge, dass aufgrund der Wirkung des ersten Federmittels 35 der Haken 3 ebenfalls in seiner Entriegelungsposition 32 eingestellt bleibt. Dies ist ein stabiler Zustand, der auch durch zufällige Einflüsse, wie kleine Krafteinwirkungen, auf den Haken bzw. das Verriegelungselement 3 nicht verändert wird. Falls das Gegenelement 30 nun in die Nähe des Verriegelungsbereichs des Verriegelungselements 3 gelangt, ist es erfindungsgemäß erforderlich, dass das Gegenelement 30 zunächst das Auswurfelement 5 von seiner Auswurfposition in seine Spannposition bzw. zumindest in die Richtung auf seine Spannposition 51 hin bewegt. Hierzu ist eine nicht zu vernachlässigende Kraft erforderlich, wie sie in Figur 9 mittels des Bezugszeichens F und eines Pfeils dargestellt ist. Die erforderliche Kraft hängt selbstverständlich von der Stärke des zweiten Federmittels 55 ab und kann durchaus erfindungsgemäß ca. 150 N betragen. Dass eine solche Kraft zufällig an der angegebenen Stelle wirkt, ist sehr unwahrscheinlich. Daher ergibt sich ein Schließen der Vorrichtung im wesentlichen nur aufgrund einer Bewegung des Gegenelementes 30. Auf diese Weise werden Fehlfunktionalitäten der erfindungsgemäßen Vorrichtung 2 weitgehend vermieden und die Sicherheit von Benutzern der Vorrichtung erhöht.

Wenn das Gegenelement 30 mit der erforderlichen Kraft F in die in der Figur 9 bezeichnete Richtung drückt, wird zunächst das Auswurfelement 5 etwas in Richtung auf seine Spannposition 51 hin bewegt, wobei nach einer gewissen Wegstrecke das erste Steuerungsmittel 58, welches insbesondere als eine Nase bzw. als ein Vorsprung des Auswurfelementes 5 in die Drehebene des Sperrelements 4 hineinragend ausgebildet ist, dass sich das Sperrelement 4 nunmehr in der Gegenuhrzeigerrichtung drehen kann (Figuren 4, 5, 9), wodurch aufgrund der Wirkung des ersten Federmittels 35 in der o. g. beschriebenen Weise eine Verriegelung sowohl des Sperrelementes 4 als auch das Verriegelungselementes 3 stattfindet, d. h. das Verriegelungselement 3 wird in seine Verriegelungsposition 31 eingestellt und das Sperrelement 4 wird in seine Sperrposition 41 eingestellt. Hierdurch ist eine sichere Verrastung bzw. Verriegelung des Gegenelementes 30 an der Komponente 20 durch die Vorrichtung 2 möglich.

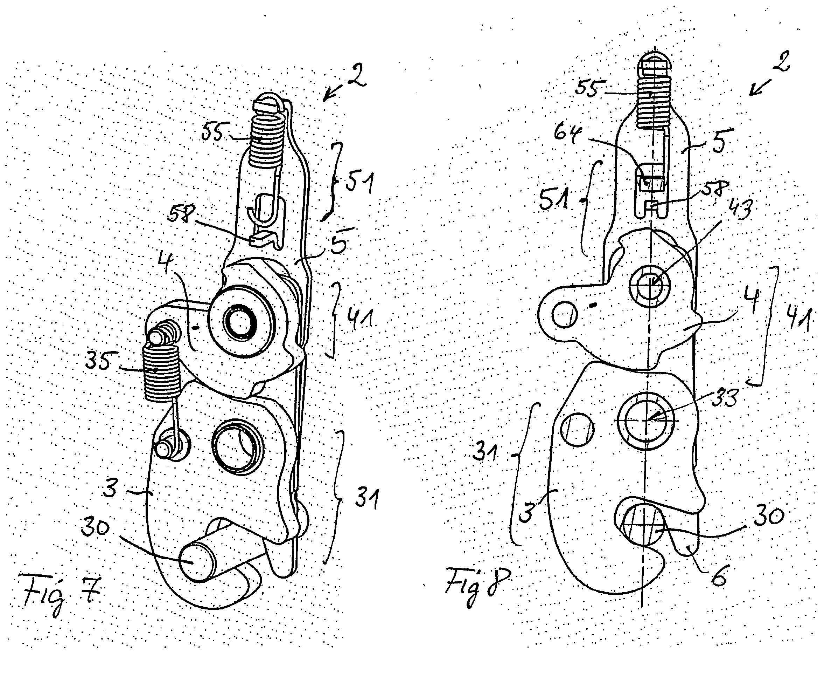

Soll die Verriegelung nun gelöst werden, so ist es erfindungsgemäß vorgesehen, dass insbesondere an dem zweiten Angriffspunkt 44 des Sperrelementes 4 mittels einer nicht dargestellten Betätigungsvorrichtung eine Bewegung im Uhrzeigersinn des Sperrelementes 4 (vgl. die Figuren 1, 8), d. h. von der Sperrposition 41 des Sperrelementes 4 hin die Betätigungsposition 42 des Sperrelementes 4 ausgeübt wird. Hierdurch wird eine Bewegung des Verriegelungselementes 3 von seiner Verriegelungsposition 31 in seine Entriegelungsposition 32 aufgrund der Formgebung sowohl des Verriegelungselementes 3 als auch des Sperrelementes 4 ermöglicht und aufgrund der Wirkung des ersten Federmittels 35 auch bewirkt, wobei die Einstellung des Verriegelungselements 3 in die Entriegelungsposition 32 nur bevorzugt ist. Dies wiederum bewirkt, dass durch die Wirkung des zweiten Federmittels 55 das Auswurfelement 5 das Gegenelement 30 aus der Verriegelung des Verriegelungselementes 3 aufwirft.

### Bezugszeichenliste

- 2: Vorrichtung
- 3: Verriegelungselement/Haken
- 4: Sperrelement
- 5: Auswurfelement
- 6: Führungselement
- 20: Komponente
- 30: Gegenelement
- 31: Verriegelungsposition
- 32: Entriegelungsposition
- 33: erste Drehachse
- 34: ersten Angriffspunkt
- 35: erstes Federmittel
- 39: erstes Führungselement
- 41: Sperrposition
- 42: Betätigungsposition
- 43: zweite Drehachse
- 44: zweiten Angriffspunkt
- 48: zweite Steuerkomponente
- 49: zweites Führungselement
- 50: unterer Bereich
- 51: Spannposition
- 52: Aufwurfposition
- 54: dritter Angriffspunkt
- 55: zweites Federmittel
- 58: Anschlag/erste Steuerkomponente
- 59: Langlöcher
- 64: vierter Angriffspunkt
- F: Kraft

## Patentansprüche

1. Vorrichtung (2) zur Verriegelung und/oder zur Entriegelung einer Komponente (20), insbesondere in oder an einem Fahrzeug, bezüglich eines Gegenelements (30), wobei die Vorrichtung (2) ein Verriegelungselement (3) und ein Sperrelement (4) aufweist, wobei das Verriegelungselement (3) in eine Verriegelungsposition (31) und in eine Entriegelungsposition (32) einstellbar ist, wobei das Sperrelement (4) in eine Sperrposition (41) und in eine Betätigungsposition (42) einstellbar ist, wobei die Einstellung der Sperrposition (41) die Einstellung der Verriegelungsposition (31) bedingt, wobei die Vorrichtung (2) ein Auswurfelement (5) umfasst, wobei das Auswurfelement (5) in eine Auswurfposition (52) und in eine Spannposition (51) einstellbar ist, wobei die Einstellung der Auswurfposition (52) eine Entriegelung des Gegenelements (30) durch das Verriegelungselement (3) bewirkt, wobei die Einstellung der Spannposition (51) auf das zu verriegelnde Gegenelement (30) eine auf die Entriegelungsposition (32) hin wirkende, einer Verriegelung entgegenwirkende Kraft bewirkt, **dadurch gekennzeichnet, dass** das Auswurfelement (5) eine gegenüber dem Verriegelungselement (3) und/oder dem Sperrelement (4) verschiebbare Schiebeplatte (5) ist.

2. Vorrichtung (2) nach Anspruch 1, **dadurch gekennzeichnet, dass** durch die Einstellung der Betätigungsposition (42) die Einnahme der Entriegelungsposition (32) bevorzugt ist.

3. Vorrichtung (2) nach einem der vorhergehenden Ansprüche, **dadurch gekennzeichnet, dass** die Einstellung der Auswurfposition (52) die Einstellung der Betätigungsposition (42) bedingt.

4. Vorrichtung (2) nach einem der vorhergehenden Ansprüche, **dadurch gekennzeichnet, dass** das Verriegelungselement (3) ein Haken (3) ist.

5. Vorrichtung (2) nach einem der vorhergehenden Ansprüche, **dadurch gekennzeichnet, dass** das Verriegelungselement (3) und das Sperrelement (4) mittels eines ersten Federmittels (35) verbunden sind.

6. Vorrichtung (2) nach einem der vorhergehenden Ansprüche, **dadurch gekennzeichnet, dass** das Verriegelungselement (3) um eine erste Drehachse (33) drehbar angeordnet ist und dass das Sperrelement (4) um eine zweite Drehachse (43) drehbar angeordnet ist.

7. Vorrichtung (2) nach einem der vorhergehenden Ansprüche, **dadurch gekennzeichnet, dass** die Vorrichtung (2) ein Führungselement (6) aufweist, wobei das Führungselement (6) die Anordnung des Verriegelungselements (3) und des Sperrelements (4) relativ zueinander festlegt, insbesondere die erste und zweite Drehachse (33, 43) festlegt.

8. Vorrichtung (2) nach einem der vorhergehenden Ansprüche, **dadurch gekennzeichnet, dass** das Auswurfelement (5) mittels eines zweiten Federmittels (55) auf die Auswurfposition (52) hin vorgespannt ist.

9. Verfahren zur Verriegelung und/oder zur Entriegelung einer Komponente (20), insbesondere in oder an einem Fahrzeug, bezüglich eines Gegenelements (30), wobei die Komponente (20) ein Verriegelungselement (3) und ein Auswurfelement (5) aufweist, wobei das Verriegelungselement (3) in eine Verriegelungsposition (31) und in eine Entriegelungsposition (32) einstellbar ist, wobei das Auswurfelement (5) in eine Auswurfposition (52) und in eine Spannposition (51) einstellbar ist, wobei die Einstellung der Auswurfposition (52) die Einnahme der Entriegelungsposition (32) bevorzugt, wobei zur Einstellung der Verriegelungsposition (31) eine Kraft vom Gegenelement (30) auf das Auswurtelement (5) oder auf die Komponente (20) ausgeübt wird, **dadurch gekennzeichnet, dass** das Verriegelungselement (3) um eine erste Drehachse (33) drehbar angeordnet ist, dass das Sperrelement (4) um eine zweite Drehachse (43) drehbar angeordnet ist und dass das Auswurfelement (5) parallel der Verbindungsstrecke der Drehachsen (33, 43) frei beweglich geführt wird.

10. Verfahren nach Anspruch 9, **dadurch gekennzeichnet, dass** eine erste Steuerkomponente (58) des Auswurfelements (5) das Verriegelungselement (3) und/oder ein Sperrelement (4) blockiert, wenn sich das Auswurfelement (5) in seiner Auswurfposition (52) befindet.

11. Verfahren nach einem der Ansprüche 9 oder 10, **dadurch gekennzeichnet, dass** beim Entriegeln der Komponente (20) das Auswurfelement (5) aufgrund der Vorspannung eines zweiten Federmittels (55) zumindest eine auf das Entfernen der Komponente (20) von dem Gegenelement (30) unterstützende Wirkung hat.

12. Verfahren nach einem der Ansprüche 9 bis 11, **dadurch gekennzeichnet, dass** die Komponente (20) ein Sperrelement (4) aufweist, wobei das Sperrelement (4) in eine Sperrposition (41) und in eine Betätigungsposition (42) einstellbar ist und wobei die Einstellung der Sperrposition (41) die Einstellung der Verriegelungsposition (31) bedingt.

## Claims

1. Device (2) for locking and/or unlocking a component (20), in particular in or on a vehicle, with respect to a mating element (30), wherein the device (2) has a locking element (3) and a blocking element (4), wherein the locking element (3) can be set into a locking position (31) and into an unlocking position (32), wherein the blocking element (4) can be set into a blocking position (41) and into an actuating position (42), wherein the setting of the blocking position (41) causes the setting of the locking position (31), wherein the device (2) comprises an ejection element (5), wherein the ejection element (5) can be set into an ejection position (52) and into a clamping position (51), wherein the setting of the ejection position (52) brings about an unlocking of the mating element (30) by the locking element (3), and wherein the setting of the clamping position (51) onto the mating element (30) to be locked causes a force which acts towards the unlocking position (32) and opposes locking, **characterized in that** the ejection element (5) is a sliding plate (5) which can be displaced in relation to the locking element (3) and/or the blocking element (4).

2. Device (2) according to Claim 1, **characterized in that**, by setting the actuating position (42), the taking up of the unlocking position (32) is preferred.

3. Device (2) according to one of the preceding claims, **characterized in that** the setting of the ejection position (52) causes the setting of the actuating position (42).

4. Device (2) according to one of the preceding claims, **characterized in that** the locking element (3) is a hook (3).

5. Device (2) according to one of the preceding claims, **characterized in that** the locking element (3) and the blocking element (4) are connected by means of a first spring means (35).

6. Device (2) according to one of the preceding claims, **characterized in that** the locking element (3) is arranged such that it can rotate about a first axis of rotation (33), and **in that** the blocking element (4) is arranged such that it can rotate about a second axis of rotation (43).

7. Device (2) according to one of the preceding claims, **characterized in that** the device (2) has a guide element (6), the guide element (6) defining the arrangement of the locking element (3) and of the blocking element (4) relative to each other, in particular defining the first and second axes of rotation (33, 43).

8. Device (2) according to one of the preceding claims, **characterized in that** the ejection element (5) is prestressed towards the ejection position (52) by means of a second spring means (55).

9. Method for locking and/or unlocking a component (20), in particular in or on a vehicle, with respect to a mating element (30), wherein the component (20) has a locking element (3) and an ejection element (5), wherein the locking element (3) can be set into a locking position (31) and into an unlocking position (32), wherein the ejection element (5) can be set into an ejection position (52) and into a clamping position (51), wherein the setting of the ejection position (52) makes it preferable for the unlocking position (32) to be taken up, and wherein, in order to set the locking position (31), a force is exerted on the ejection element (5) or on the component (20) by the mating element (30), **characterized in that** the locking element (3) is arranged such that it can rotate about a first axis of rotation (33), **in that** the blocking element (4) is arranged such that it can rotate about a second axis of rotation (43), and **in that** the ejection element (5) is guided in a freely movable manner parallel to the connecting section of the axes of rotation (33, 43).

10. Method according to Claim 9, **characterized in that** a first control component (58) of the ejection element (5) blocks the locking element (3) and/or a blocking element (4) when the ejection element (5) is in its ejection position (52).

11. Method according to either of Claims 9 and 10, **characterized in that**, when the component (20) is unlocked, the prestressing of a second spring means (55) causes the ejection element (5) to have at least an effect supporting the removal of the component (20) from the mating element (30).

12. Method according to one of Claims 9 to 11, **characterized in that** the component (20) has a blocking element (4), with it being possible for the blocking element (4) to be set into a blocking position (41) and into an actuating position (42), and with the setting of the blocking position (41) causing the setting of the locking position (31).

## Revendications

1. Dispositif (2) pour verrouiller et/ou déverrouiller un composant (20), en particulier dans ou sur un véhicule, par rapport à un élément conjugué (30), le dispositif (2) présentant un élément de verrouillage (3) et un élément de blocage (4), l'élément de verrouillage (3) pouvant être ajusté dans une position de verrouillage (31) et dans une position de déverrouillage (32), l'élément de blocage (4) pouvant être ajusté dans une position de blocage (41) et dans une position d'activation (42), l'ajustement de la position de blocage (41) entraînant l'ajustement de la position de verrouillage (31), le dispositif (2) comprenant un élément d'éjection (5), l'élément d'éjection (5) pouvant être ajusté dans une position d'éjection (52) et dans une position de serrage (51), l'ajustement de la position d'éjection (52) entraînant un déverrouillage de l'élément conjugué (30) par l'élément de verrouillage (3), l'ajustement de la position de serrage (51) sur l'élément conjugué à verrouiller (30) provoquant une force agissant dans le sens de la position de déverrouillage (32) et opposée à un verrouillage, **caractérisé en ce que** l'élément d'éjection (5) est une plaque coulissante (5) pouvant coulisser par rapport à l'élément de verrouillage (3) et/ou par rapport à l'élément de blocage (4).

2. Dispositif (2) selon la revendication 1, **caractérisé en ce que** l'on préfère adopter la position de déverrouillage (32) par l'ajustement de la position d'activation (42).

3. Dispositif (2) selon l'une quelconque des revendications précédentes, **caractérisé en ce que** l'ajustement de la position d'éjection (52) entraîne l'ajustement de la position d'activation (42).

4. Dispositif (2) selon l'une quelconque des revendications précédentes, **caractérisé en ce que** l'élément de verrouillage (3) est un crochet (3).

5. Dispositif (2) selon l'une quelconque des revendications précédentes, **caractérisé en ce que** l'élément de verrouillage (3) et l'élément de blocage (4) sont connectés au moyen d'un premier moyen à ressort (35).

6. Dispositif (2) selon l'une quelconque des revendications précédentes, **caractérisé en ce que** l'élément de verrouillage (3) est disposé de manière à pouvoir tourner autour d'un premier axe de rotation (33) et **en ce que** l'élément de blocage (4) est disposé de manière à pouvoir tourner autour d'un deuxième axe de rotation (43).

7. Dispositif (2) selon l'une quelconque des revendications précédentes, **caractérisé en ce que** le dispositif (2) présente un élément de guidage (6), l'élément de guidage (6) fixant l'un par rapport à l'autre l'agencement de l'élément de verrouillage (3) et de l'élément de blocage (4), notamment fixant le premier et le deuxième axe de rotation (33, 43).

8. Dispositif (2) selon l'une quelconque des revendications précédentes, **caractérisé en ce que** l'élément d'éjection (5) est précontraint dans le sens de la position d'éjection (52) au moyen d'un deuxième moyen à ressort (55).

9. Procédé pour verrouiller et/ou déverrouiller un composant (20), en particulier dans ou sur un véhicule, par rapport à un élément conjugué (30), le composant (20) présentant un élément de verrouillage (3) et un élément d'éjection (5), l'élément de verrouillage (3) pouvant être ajusté dans une position de verrouillage (31) et dans une position de déverrouillage (32), l'élément d'éjection (5) pouvant être ajusté dans une position d'éjection (52) et dans une position de serrage (51), la position de déverrouillage (32) étant de préférence adoptée par l'ajustement de la position d'éjection (52), et pour l'ajustement de la position de verrouillage (31), une force étant exercée par l'élément conjugué (30) sur l'élément d'éjection (5) ou sur le composant (20), **caractérisé en ce que** l'élément de verrouillage (3) est disposé de manière à pouvoir tourner autour d'un premier axe de rotation (33), **en ce que** l'élément de blocage (4) est disposé de manière à pouvoir tourner autour d'un deuxième axe de rotation (43) et **en ce que** l'élément d'éjection (5) est guidé de manière librement déplaçable parallèlement à la distance de connexion des axes de rotation (33, 43).

10. Procédé selon la revendication 9, **caractérisé en ce qu'**un premier composant de commande (58) de l'élément d'éjection (5) bloque l'élément de verrouillage (2) et/ou un élément de blocage (4), lorsque l'élément d'éjection (5) se trouve dans sa position d'éjection (52).

11. Procédé selon l'une quelconque des revendications 9 ou 10, **caractérisé en ce que** lors du déverrouillage du composant (20), l'élément d'éjection (5) a au moins un effet favorisant l'écartement du composant (20) de l'élément conjugué (30) en raison de la précontrainte d'un deuxième moyen à ressort (55).

12. Procédé selon l'une quelconque des revendications 9 à 11, **caractérisé en ce que** le composant (20) présente un élément de blocage (4), l'élément de blocage (4) pouvant être ajusté dans une position de blocage (41) et dans une position d'activation (42), et l'ajustement de la position de blocage (41) entraînant l'ajustement de la position de verrouillage (31).
